# EUROPEAN PATENT APPLICATION

(11) **EP 4 030 735 A1**
(43) Date of publication of application: **20.07.2022**
(21) Application number: 22164804.1
(22) Date of filing: 28.03.2022
(51) Int. Cl.: H04L 67/10

(54) **METHOD OF DATA INTERACTION, DATA INTERACTION APPARATUS, ELECTRONIC DEVICE AND NON-TRANSITORY COMPUTER READABLE STORAGE MEDIUM**

(30) Priority: 29.03.2021 CN 202110334351
(71) Applicant: BEIJING BAIDU NETCOM SCIENCE TECHNOLOGY CO., LTD., No. 10 Shangdi 10th Street Haidian District Beijing 100085 (CN)
(72) Inventor: LIU, Ji, Beijing, 100085 (CN); ZHANG, Xiyue, Beijing, 100085 (CN); XIONG, Haoyi, Beijing, 100085 (CN); DOU, Dejing, Beijing, 100085 (CN); JI, Shilei, Beijing, 100085 (CN)
(74) Representative: Schwarz & Partner Patentanwälte GmbH

(57) **Abstract**

A method of data interaction, a data interaction apparatus, an electronic device and a non-transitory computer readable storage medium are provided, related to field of computer technologies, and in particular to the field of artificial intelligence technologies. When the method of data interaction is applied to the first data platform, the method includes: sending a data request to a second data platform based on a first resource server provided by a cloud or based on a local server; acquiring response data fed back by the second data platform based on a second resource server provided by the cloud; at least one of the first resource server and the second resource server is dynamically created by the cloud.

## Description

### TECHNICAL FIELD

The present application relates to the field of computer technologies, and in particular, to a method of data interaction, a data interaction apparatus, an electronic device and a non-transitory computer readable storage medium.

### BACKGROUND

The data federation learning platform is a one-stop cross-organization data security cooperation platform, and two cooperation parties can select different cooperation modes according to business scenes, calculation requirements and customer budgets, so that the data federation learning platform is widely applied to the fields of logistics, operators, financial services and the like. At present, a data federation learning platform is a fixed cooperation platform, and two cooperators respectively possess respective data related to users and store the data in a local cluster.

### SUMMARY

The disclosure provides a method of data interaction, a data interaction apparatus, an electronic device and a non-transitory computer readable storage medium.

According to a first aspect of the present disclosure, a method of data interaction is provided in the present disclosure, including:
sending a data request to a second data platform based on a first resource server provided by a cloud or based on a local server;
acquiring response data fed back by the second data platform based on a second resource server provided by the cloud;
at least one of the first resource server and the second resource server is dynamically created by the cloud.

According to a second aspect of the present disclosure, a method of data interaction is further provided in the present disclosure, including:
acquiring a data request sent by a first data platform based on a first resource server provided by a cloud or based on a local server;
in response to the data request, sending response data to the first data platform based on a second resource server provided by the cloud;
at least one of the first resource server and the second resource server is dynamically created by the cloud.

According to a third aspect of the present disclosure, a method of data interaction is further provided in the present disclosure, including:
in the case that that a first data platform sends a data request to a second data platform based on a first resource server provided by a cloud or based on a local server, feeding back, by the second data platform, response data to the first data platform based on a second resource server provided by the cloud;
at least one of the first resource server and the second resource server is dynamically created by the cloud.

According to a fourth aspect of the present disclosure, a data interaction apparatus is further provided in the present disclosure, including:
a first sending module, configured to send a data request to a second data platform based on a first resource server provided by a cloud or based on a local server;
a first acquiring module, configured to acquire response data fed back by the second data platform based on a second resource server provided by the cloud;
at least one of the first resource server and the second resource server is dynamically created by the cloud.

According to a fifth aspect of the present disclosure, a data interaction apparatus is further provided in the present disclosure, including:
a second acquiring module, configured to acquire a data request sent by a first data platform based on a first resource server provided by a cloud or based on a local server;
a second sending module, configured to, in response to the data request, send response data to the first data platform based on a second resource server provided by the cloud;
at least one of the first resource server and the second resource server is dynamically created by the cloud.

According to a sixth aspect of the present disclosure, a data interaction apparatus is further provided in the present disclosure, including:
a creating module, configured to, in the case that that a first data platform sends a data request to a second data platform based on a first resource server provided by a cloud or based on a local server, feed back response data to the first data platform based on a second resource server provided by the cloud; at least one of the first resource server and the second resource server is dynamically created by the cloud.

According to a seventh aspect of the present disclosure, an electronic device is further provided in the present disclosure, comprising:
at least one processor; and
a memory communicatively coupled to the at least one processor;
the memory stores instructions executable by the at least one processor to perform the method in the first aspect, or to perform the method in the second aspect, or to perform the method in the third aspect.

According to an eighth aspect of the present disclosure, a non-transitory computer readable storage medium is further provided in the present disclosure, storing computer instructions to enable a computer to perform the method in the first aspect, or to perform the method in the second aspect, or to perform the method in the third aspect.

According to a ninth aspect of the present disclosure, a computer program product is further provided in the present disclosure, including a computer program, where the computer program is executed by a processor to perform the method in the first aspect, or perform the method in the second aspect, or perform the method in the third aspect.

In the present disclosure, at least one of the first resource server and the second resource server is dynamically created by the cloud, so that the cloud can implement flexible deployment of the resource servers.

It should be understood that the statements in this section are not intended to identify key or critical features of the embodiments of the present disclosure, nor are they intended to limit the scope of the present disclosure. Other features of the present disclosure will become apparent from the following description.

### BRIEF DESCRIPTION OF THE DRAWINGS

The drawings are included to provide a better understanding of the present solution and are not to be construed as limiting the present disclosure. Wherein:
Fig. 1 is a flow chart of a method of data interaction provided in a first embodiment of the present disclosure;
Fig. 2a is a first schematic view of a scenario of a method of data interaction in a first embodiment of the disclosure;
Fig. 2b is a second schematic view of a scenario of a method of data interaction in a first embodiment of the disclosure;
Fig. 2c is a third schematic view of a scenario of a method of data interaction in a first embodiment of the disclosure;
Fig. 2d is a fourth schematic view of a scenario of a method of data interaction in a first embodiment of the disclosure;
Fig. 3 is a flow chart of a method of data interaction provided in accordance with a second embodiment of the present disclosure;
Fig. 4 is a flow chart of a method of data interaction provided in accordance with a third embodiment of the present disclosure;
Fig. 5 is a block diagram of a data interaction apparatus provided in accordance with a fourth embodiment of the present disclosure;
Fig. 6 is a block diagram of a data interaction apparatus provided in accordance with a fifth embodiment of the present disclosure;
Fig. 7 is a block diagram of a data interaction apparatus provided in accordance with a sixth embodiment of the present disclosure; and
Fig. 8 is a block diagram of an electronic device for implementing a method of data interaction of an embodiment of the present disclosure.

### DETAILED DESCRIPTION

Exemplary embodiments of the present disclosure are described below with reference to the accompanying drawings, in which various details of embodiments of the present disclosure are included to assist understanding, and which are to be considered as merely exemplary. Accordingly, those of ordinary skill in the art will recognize that various changes and modifications of the embodiments described herein can be made without departing from the scope and spirit of the disclosure. Also, descriptions of well-known functions and constructions are omitted in the following description for clarity and conciseness.

The embodiment of the disclosure provides a method of data interaction.

In order to better understand the technical solutions provided by the present disclosure, the following explains technical scenarios and related technical features involved in the embodiments of the present disclosure.

Federal Learning (Federal Learning): the method is mainly used for solving the problem of centralized model training by combining data existing in a plurality of terminals (such as mobile handsets). In the artificial intelligence era, a large amount of training data is required for obtaining a machine learning model, particularly a deep learning model, as a premise, but in many business scenes, the training data of the model is often dispersed in different business teams, departments and even different companies, so that the data sources of the training data are independent and isolated, the federal learning technology can provide support for cross-team data cooperation, and the model training can be carried out by combining a plurality of data sources on the premise of protecting the privacy and the safety of user data.

Cloud: based on software that applies virtualized technology, the cloud referred to in this disclosure may refer to a federal learning platform that can enable federal learning. The cloud comprises a first data platform and a second data platform, and the first data platform and the second data platform can refer to two business parties for realizing data interaction on the federal learning platform. In some scenarios, the first data platform may also be referred to as a data consumer or a service consumer, and the second data platform may also be referred to as a data provider or a service provider. It should be noted that the actual application roles of the first data platform and the second data platform are not fixed, and the first data platform may serve as a data user in some application scenarios, and may serve as a data provider in other application scenarios; similarly, the second data platform may be a data provider in some application scenarios and a data consumer in other scenarios. The method of data interaction provided by the present disclosure will be explained by specific embodiments below.

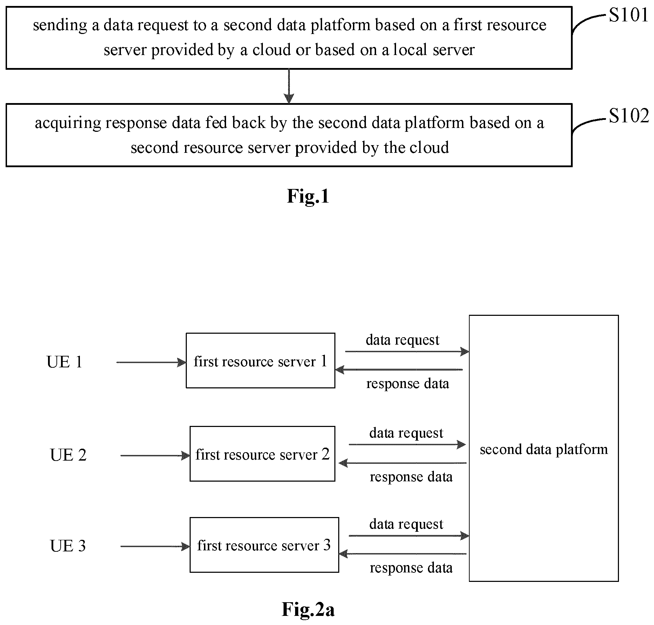

Referring to Fig. 1, Fig. 1 is a flowchart of a method of data interaction according to a first embodiment of the disclosure, where the method is applied to a first data platform. As shown in Fig. 1, the method comprises the steps of:

Step S101, sending a data request to a second data platform based on a first resource server provided by a cloud or based on a local server.

In an embodiment of the present disclosure, the first data platform sends the data request to the second data platform based on the first resource server provided by the cloud. In this embodiment, the first resource server is a local server created on the first data platform through the cloud, but not the first data platform. For example, when a first data platform acquires a data acquisition request sent by user equipment, the cloud creates a first resource server corresponding to the user equipment on the first data platform based on the data acquisition request; or the first resource server may also be a resource server deployed statically by the cloud on the first data platform, that is, the cloud does not create the first resource server on the first data platform when the first data platform obtains the data acquisition request sent by the user equipment, and the first resource server may be created on the first data platform when the cloud establishes a communication connection with the first data platform.

Furthermore, the first data platform can send the data request to the second data platform through the first resource server statically deployed or dynamically created by the cloud, so that a more flexible deployment mode is provided for the resource server on the first data platform.

In another embodiment, the first data platform sends a data request to the second data platform based on the local server. The local server may refer to a server of the first data platform itself, and is not provided by a cloud. Therefore, the first data platform uses the local server of the first data platform to send the data request, and the data safety and the data privacy can be better guaranteed.

S 102, acquiring response data fed back by the second data platform based on a second resource server provided by the cloud.

It can be understood that, after receiving the data request sent by the first data platform, the second data platform may respond to the data request, for example, perform corresponding data calculation based on the data request, and feed back a data result obtained after calculation as response data to the first data platform.

It should be noted that, if the first data platform is based on the data request sent by the first resource server provided by the cloud, the response data may be fed back to the first resource server and may be stored in the first resource server. If the first data server is based on the data request sent by the local server, the response data may be fed back to the local server and stored in the local server.

In an embodiment of the present disclosure, at least one of the first resource server and the second resource server is dynamically created by the cloud. The dynamic creation refers to that the cloud creates a corresponding resource server on the first data platform or the second data platform when the first data platform or the second data platform needs to use the resource server for data interaction. Therefore, at least one of the first resource server and the second resource server is dynamically established through the cloud, so that the cloud can flexibly deploy the resource servers in the interaction process of a data user and a data provider, the cost of the first data platform and the second data platform in federal learning is effectively reduced, and various optional deployment modes can be provided for users to meet different scene requirements of the users on federal learning.

Optionally, the sending the data request to the second data platform based on the first resource server provided by the cloud includes:
in the case that that a data acquisition request sent by a user equipment is acquired, sending the data request to the second data platform, based on the first resource server dynamically established by the cloud;
   or
in the case that that a data acquisition request sent by user equipment is acquired, determining the first resource server provided by the cloud corresponding to the user equipment, and sending the data request to the second data platform based on the first resource server, where the first resource server is a resource server deployed by the cloud on the first data platform.

In the embodiment of the disclosure, the first data platform sends the data request to the second data platform based on the first resource server provided by the cloud in the case of obtaining the data acquisition request sent by the user equipment.

For example, in an embodiment of the present disclosure, when a first data platform acquires a data acquisition request sent by a user equipment, the cloud creates a first resource server in the first data platform, so that the first data platform sends the data request to a second data platform based on the first resource server dynamically created by the cloud. That is to say, if the first data platform does not have a requirement of sending a data request to the second data platform, the cloud will not create the first resource server on the first data platform. Therefore, the first resource server is dynamically created by the cloud in the case that that the first data platform has the requirement of sending the data request, and higher safety guarantee is provided for the data request.

Or, in another embodiment, when the first data platform acquires a data acquisition request sent by the user equipment, the first data platform sends the data request to the second data platform based on the first resource server already deployed at the cloud. That is to say, the first resource server is not created by the cloud when the first data platform acquires the data acquisition request, but is already created by the cloud and deployed on the first data platform. Optionally, the deployment manner of the cloud to the first resource server may also be referred to as static deployment.

Specifically, when the first resource server is statically deployed in the first data platform as the cloud, the second resource server is dynamically created for the cloud according to the requirement of the second data platform for feeding back the response data; if the first resource server is dynamically created by the cloud based on the requirement of sending the data request by the first data platform, the second resource server may be dynamically created by the cloud according to the requirement of feeding back the response data by the second data platform, or may be statically deployed at the second data platform by the cloud.

In the embodiment of the present disclosure, the first resource server may be dynamically created by the cloud based on the data interaction requirement of the first data platform or may also be deployed by the cloud on the first data platform, so that the deployment of the first resource server is more flexible, and different service scene requirements are met.

Optionally, the first resource server is dynamically created by the cloud, the method further includes:
feeding back the response data to the user equipment through the first resource server, and releasing the first resource server.

In this embodiment, when a first resource server acquires a data acquisition request sent by a user equipment for a first data platform, the first resource server is dynamically created by a cloud, and then the first data platform sends the data request to a second data platform through the first resource server that is just created, and after response data fed back by the second data platform is received, the first data platform sends the response data to the user equipment through the first resource server to complete a response to the data acquisition request, and at this time, the first data platform may release the first resource server through the cloud, that is, the first data platform no longer has the first resource server. Therefore, the first resource server can be dynamically created by the cloud when the first resource server is required to be used, and after data interaction is completed, the first resource server is dynamically released by the cloud, so that the space of the first data platform cannot be occupied, flexible deployment of the resource server on the first data platform is facilitated, and the space utilization rate of the first data platform is higher.

Optionally, in this embodiment of the present disclosure, the second resource server is dynamically created by the cloud, and after the response data is fed back to the first data platform, the second resource server is released. That is to say, the second resource server is dynamically created by the cloud after the second data platform receives the data request sent by the first data platform, and when the second data platform sends the response data to the first data platform based on the dynamically created second resource server, the second resource server may be released through the cloud, that is, the second data platform no longer has the second resource server. Therefore, the second resource server can be dynamically created by the cloud when the second resource server is required to be used, and after data interaction is completed, the second resource server is dynamically released by the cloud, so that the space of the second data platform cannot be occupied, flexible deployment of the resource server on the second data platform is facilitated, and the space utilization rate of the second data platform is higher.

Optionally, in a case that the first resource server is dynamically created by the cloud, the second resource server is a resource server that is deployed by the cloud on the second data platform. In this embodiment, the first resource server is dynamically created by the cloud or temporarily created by the cloud when the first data platform needs to send a data request or has a data interaction requirement, and the second resource server may be a resource server in which the cloud is already deployed on the second data platform, that is, the second resource server is not temporarily created by the cloud but already exists on the second data platform. Therefore, at least one of the first resource server and the second resource server is dynamically created through the cloud, so that the cloud deploys the resource servers more flexibly to meet different service scenes.

In the embodiment of the present disclosure, the data acquisition request sent by the user equipment and the acquisition of the response data both need to be performed after the user equipment obtains authorization, so that the data security on the data platform can be better ensured. In addition, the cloud is fully automatic in dynamic establishment and release of the resource server, so that the privacy and safety of the data interaction process are protected while the user is facilitated, and more flexible and safe data use experience is provided for the user.

In order to better understand the technical solutions provided by the embodiments of the present disclosure, several specific embodiments are described below.

Referring to Fig. 2a, taking the user equipment 1 and the first resource server 1 as an example, when the user equipment 1 sends a data acquisition request to the first data platform, the cloud may dynamically create a first resource server 1 corresponding to the user equipment 1 through cloud dynamic virtualization and at a first data platform, and the first data platform sends a data request to the second data platform through the first resource server 1, the second resource server on the second data platform is a resource server deployed by the cloud through the cloud static virtual machine, the second data platform feeds back response data to the first resource server 1 through the deployed second resource server, the first resource server 1 may send the response data to the user equipment 1, or it may be stored on the first resource server 1 to facilitate the user equipment 1 being able to retrieve it when needed for use. The first data platform may also be configured to dynamically create the corresponding first resource server 2 from the cloud based on a request of the user equipment 2, and dynamically create the corresponding first resource server 3 from the cloud based on a request of the user equipment 3, and the like. That is, the first data platform has a resource server dedicated to each user equipment, and the resource servers of different user equipment are completely independent and isolated, so as to ensure data security and privacy of different users.

Further, the first resource server on the first data platform can be statically released, that is, no longer exist on the first data platform after completing the data interaction, for example, after feeding back the response data to the user equipment, so as to avoid occupying the space of the first data platform.

In this embodiment, the first resource server of the first data platform may be dynamically created through the cloud in the case that that data interaction is required, and may be released after the data interaction is completed, so that the space of the first data platform is not occupied, the space utilization rate of the first data platform is improved, and the deployment of the resource server on the first data platform is more flexible.

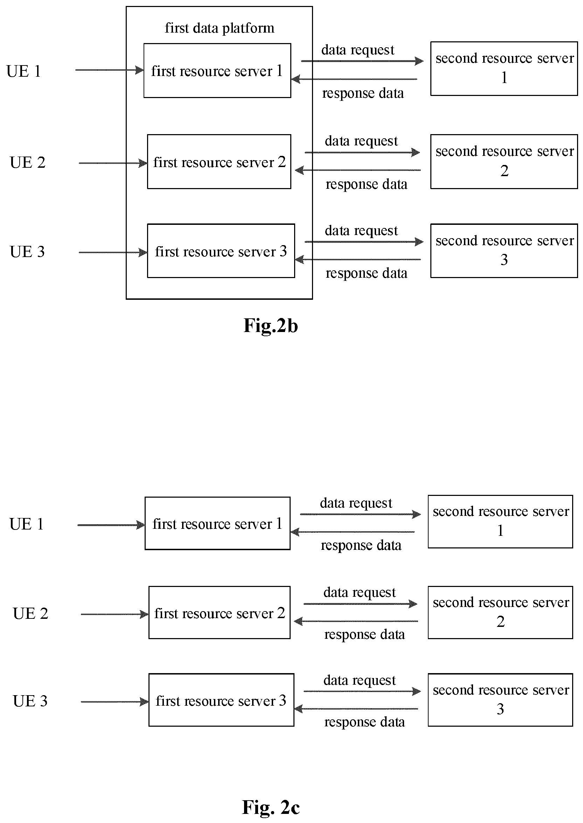

Referring to Fig. 2b, the first data platform includes a first resource server 1, a first resource server 2, and a first resource server 3 that are statically deployed by the cloud, that is, the first resource server is not dynamically created by the cloud when acquiring a request of the user equipment, but is created by the cloud and deployed on the first data platform before that. Moreover, the first data platform has a resource server dedicated to each user equipment, and the resource servers of different user equipment are completely independent and isolated. In this embodiment, the second resource server of the second data platform is dynamically created by the cloud, for example, when the second data platform receives a data request sent by the first resource server 1, the corresponding second resource server 1 is dynamically created on the second data platform through the cloud, and a response data is obtained by responding to the data request through the second resource server 1, and the response data is fed back to the first resource server 1. Further, the second resource server on the second data platform can be statically released, that is, no longer exists on the second data platform after completing the data interaction, for example, after feeding back the response data to the first resource server, so as to avoid occupying the space of the second data platform.

In this embodiment, the second resource server of the second data platform may be dynamically created through the cloud in the case that that data interaction is required, and may be released after the data interaction is completed, so that the space of the second data platform is not occupied, the space utilization rate of the second data platform is improved, and the deployment of the resource server on the second data platform is more flexible.

Referring to Fig. 2c, the first resource server and the second resource server are dynamically created through the cloud. For example, when the user equipment 1 sends a data acquisition request to the first data platform, the cloud dynamically creates a first resource server 1 corresponding to the user equipment 1 on the first data platform, and then the first data platform sends the data request to the second data platform through the first resource server 1, and then the second data platform also dynamically creates a corresponding second resource server 1 through the cloud, and performs processing such as calculation on the acquired data request to obtain response data, and the second resource server 1 feeds the response data back to the first resource server 1, and the first resource server 1 further sends the response data to the user equipment 1. The first data platform can dynamically create a resource server dedicated to each user equipment through the cloud, the resource servers of different user equipment are completely independent and isolated, the second data platform can dynamically create second resource servers corresponding to the first resource servers one to one through the cloud, and then data interaction between different first resource servers and different second resource servers is mutually independent, so that data safety is guaranteed.

Furthermore, after the data interaction between the first resource server and the second resource server is completed, the data interaction can be released through the cloud, that is, the first resource server does not exist in the first data platform any more, and the second resource server does not exist in the second data platform any more.

In the embodiment, the first resource server and the second resource server are dynamically created by the cloud in the case that of data interaction requirements, and can be released after data interaction is completed, so that the space of the data platform cannot be occupied, the space utilization rate of the data platform is improved, and the deployment of the resource servers on the data platform is more flexible.

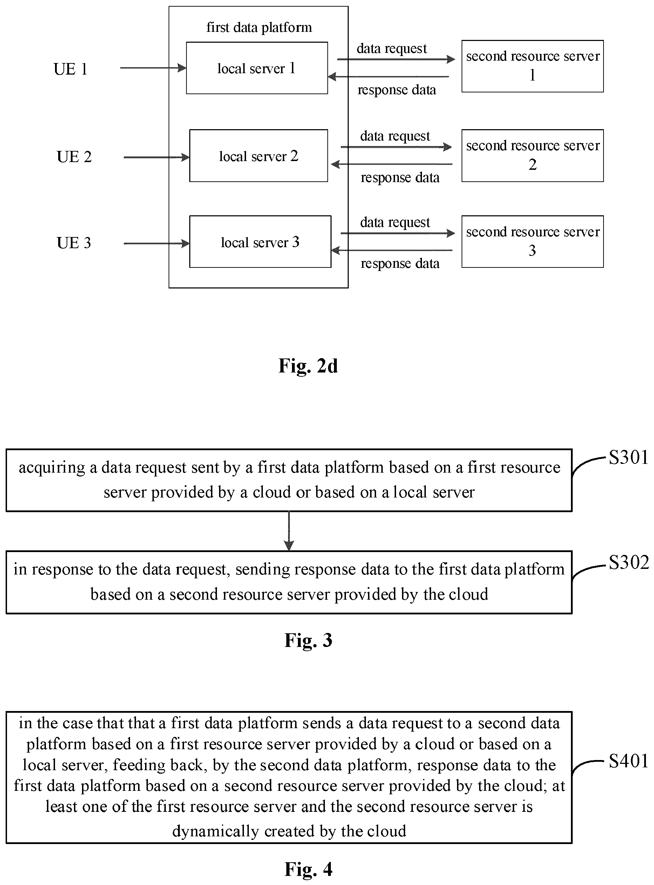

Referring to Fig. 2d, the first data platform is deployed with local servers, and different local servers correspond to different user equipment, that is, there is a local server dedicated to each user equipment on the first data platform, and the local servers of different user equipment are completely independent and isolated. For example, when the local server 1 acquires a data acquisition request sent by the user equipment 1, the local server 1 sends the data request to the second data platform, and then the second data platform feeds back response data to the local server 1 through the second resource server 1 corresponding to the local server 1. The second resource server 1 may be dynamically created by the cloud, or may be deployed on the second data platform. In the embodiment, the first data platform realizes data interaction with the second data platform through the local server, so that data security can be better ensured.

Referring to Fig. 3, Fig. 3 is a flowchart of a method of data interaction provided according to a second embodiment of the disclosure, and the method is applied to a second data platform. As shown in Fig. 3, the method comprises the steps of:
Step S301, acquiring a data request sent by a first data platform based on a first resource server provided by a cloud or based on a local server;

Optionally, the first data platform may send a data request to the second data platform through a first resource server provided by the cloud, and the first resource server may be dynamically created by the cloud when the first data platform obtains the data acquisition request sent by the user equipment; alternatively, the first resource server may also be statically deployed on the first data platform by the cloud.

Or, the first data platform may also send the data request to the second data platform through the local server, which is not implemented through a resource server created by a cloud, so that data security on the first data platform can be better ensured.

It should be noted that, a specific implementation manner of sending the data request from the first data platform to the second data platform may refer to the description in the first embodiment, and details of this embodiment are not described again.

Step S302, in response to the data request, sending response data to the first data platform based on a second resource server provided by the cloud.

After the second data platform acquires the data request, the data request may be subjected to data calculation and other processing to obtain response data corresponding to the data request, and the response data is fed back to the first data platform through the second resource server. It should be noted that, when the first data platform sends the data request through the first resource server, the second resource server feeds back the response data to the first resource server; in the case that that the first data platform sends the data request through the local server, the second resource server feeds the response data back to the local server.

In an embodiment of the present disclosure, at least one of the first resource server and the second resource server is dynamically created by the cloud. The dynamic creation refers to that the cloud creates a corresponding resource server on the first data platform or the second data platform when the first data platform or the second data platform needs to use the resource server for data interaction. Therefore, at least one of the first resource server and the second resource server is dynamically established through the cloud, so that the cloud can flexibly deploy the resource servers in the interaction process of a data user and a data provider, the cost of the first data platform and the second data platform in federal learning is effectively reduced, and various optional deployment modes can be provided for users to meet different scene requirements of the users on federal learning.

Optionally, the sending the response data to the first data platform based on the second resource server provided by the cloud includes:
sending the response data to the first data platform, based on a second resource server dynamically created based on the cloud;
   or
sending the response data to the first data platform, based on the second resource server deployed by the cloud on the second data platform.

In an embodiment, when the second data platform acquires a data request sent by the first data platform, the cloud dynamically creates a second resource server on the second data platform, and feeds back response data to the first data platform through the dynamically created second resource server. That is to say, if the second data platform does not have a requirement for data interaction, for example, does not receive a data request sent by the first data platform, the cloud does not create the second resource server, and the second data platform does not have the second resource server. Therefore, the second resource server is dynamically created by the cloud when the second data platform has a data interaction requirement, and the second resource server can be prevented from occupying the space on the second data platform, so that the space utilization rate of the second data platform is improved.

In another embodiment, the second data platform feeds back response data to the first data platform based on the second resource server deployed at the cloud in the case that that the second data platform acquires the data request sent by the first data platform. That is to say, the second resource server is not created when the second data platform has a data interaction demand, but is already created by the cloud and deployed on the second data platform, so as to ensure that the second data platform responds to the data request in time.

In the embodiment of the present disclosure, the second resource server may be dynamically created by the cloud based on the data interaction requirement of the second data platform or may also be deployed by the cloud on the second data platform, so that the deployment of the second resource server is more flexible, and different service scene requirements are met.

Optionally, the second resource server is dynamically created by the cloud, and after sending the response data to the first data platform, the method further includes:
releasing the second resource server.

In this embodiment, the second resource server is dynamically created by the cloud, and when the second resource server feeds back the response data to the first data platform, the second data platform may release the second resource server, or release the second resource server through the cloud, that is, the second resource server no longer exists in the second data platform. Therefore, the second resource server can be dynamically created by the cloud when the second resource server is required to be used, and is dynamically released after data interaction is completed, so that the second resource server does not occupy the space of the second data platform, flexible deployment of the resource server on the second data platform is facilitated, and the space utilization rate of the second data platform is higher.

Optionally, in this disclosure, the first resource server is dynamically created by the cloud when the first data platform obtains a data acquisition request sent by the user equipment, and the first resource server is released after the response data is fed back to the user equipment. That is to say, the first resource server may be dynamically created by the cloud in the case that that the first data platform has a data interaction requirement, and after the data interaction is completed, the first resource server is released, so that the first resource server does not occupy the space of the first data platform, which is more favorable for flexible deployment of the resource server on the first data platform, and the space utilization rate of the first data platform is higher.

In addition, in a case that the second resource server is dynamically created by the cloud, the first resource server is a resource server of which the cloud is deployed on the first data platform. In this embodiment, the second resource server is dynamically created by the cloud when the second data platform has a data interaction requirement, and the first resource server may be a resource server in which the cloud is already deployed on the first data platform, that is, the cloud is not dynamically created or temporarily created based on the data interaction requirement of the first data platform, but already exists on the first data platform. Therefore, the first data platform can realize static deployment of the first resource server in the case that of larger space, so that the deployment of the first resource server is more flexible, and different service scenes can be met.

It should be noted that, in the embodiment of the present disclosure, a specific process of data interaction and a specific deployment manner of a resource server on a corresponding data platform may refer to the description in the first embodiment, and details are not repeated in the embodiment of the present disclosure.

Referring to Fig. 4, Fig. 4 is a flowchart of a method of data interaction according to a third embodiment of the disclosure, where the method is applied to a cloud, and the cloud includes a first data platform and a second data platform. As shown in Fig. 4, the method comprises the steps of:

Step S401, in the case that that a first data platform sends a data request to a second data platform based on a first resource server provided by a cloud or based on a local server, feeding back, by the second data platform, response data to the first data platform based on a second resource server provided by the cloud; at least one of the first resource server and the second resource server is dynamically created by the cloud.

For example, the cloud may be configured to dynamically create a first resource server in a first data platform when the first data platform needs to send a data request, and then cause the first data platform to send the data request to a second data platform based on the dynamically created first resource server. In this case, the second resource server of the second data platform may be a resource server already deployed in the cloud, and is not created at present.

Or, the cloud may also deploy the first resource server in advance on the first data platform, and when the first data platform needs to send a data request, the cloud sends the data request to the second data platform through the deployed first resource server, and dynamically creates the second resource server on the second data platform by the cloud, that is, the second resource server is dynamically created by the cloud in the case that that the second data platform receives the data request, instead of implementing the deployment.

Or the cloud may dynamically create the first resource server in the first data platform in the case that that the first data platform needs to send the data request, and then the first data platform sends the data request to the second data platform based on the first resource server, and the second data platform dynamically creates the second resource server through the cloud in the case that that the second data platform receives the data request. In this embodiment, first resource server and second resource server are established by the cloud when there is data interaction requirement, so that first data platform space and second data platform space are not occupied, so as to improve the utilization ratio to the data platform space.

In the embodiment of the present disclosure, the dynamic creation refers to that the cloud creates a corresponding resource server on a first data platform or a second data platform only when the first data platform or the second data platform needs to use the resource server for data interaction. Therefore, at least one of the first resource server and the second resource server is dynamically established through the cloud, so that the cloud can flexibly deploy the resource servers in the interaction process of a data user and a data provider, the cost of the first data platform and the second data platform in federal learning is effectively reduced, and various optional deployment modes can be provided for users to meet different scene requirements of the users on federal learning.

Optionally, the method further includes:
in the case that a data acquisition request sent by user equipment is acquired by the first data platform, dynamically creating the first resource server on the first data platform.

In the embodiment of the disclosure, when the first data platform acquires a data acquisition request sent by the user equipment, the cloud dynamically creates the first resource server on the first data platform, so that the first data platform can send the data request to the second data platform based on the first resource server. Optionally, the second resource server may also be dynamically created by the second data platform through the cloud after receiving the data request; or, the second resource server may also be a cloud deployed in the second data platform in advance. Therefore, the first resource server can be dynamically created through the cloud when there is a data interaction requirement, and the resource server on the first data platform can be more flexibly deployed.

Further, the method further includes:
after the response data is acquired by the first data platform and the response data is sent to the user equipment, releasing the first resource server.

The first resource server is dynamically created by the cloud in the case that that the first data platform acquires a data acquisition request sent by the user equipment. After the second data platform feeds back the response data to the first resource server through the second resource server, the first resource server may send the response data to the user equipment to respond to the data acquisition request of the user equipment, so that the first resource server completes data interaction, and the cloud releases the first resource server of the first data platform, that is, the first data platform no longer has the first resource server. Therefore, the first resource server can be dynamically created by the cloud when the first resource server is required to be used, and is dynamically released by the cloud after data interaction is completed, so that the space of the first data platform cannot be occupied, and flexible deployment of the resource server on the first data platform is facilitated.

Optionally, the method further includes:
in the case that the data request sent by the first data platform is received by the second data platform, dynamically creating the second resource server on the second data platform.

In this embodiment of the disclosure, the second resource server may be dynamically created by the cloud after the second data platform receives the data request sent by the first data platform. Therefore, flexible deployment of the resource servers on the second data platform can be realized, and the occupation of the space of the second data platform is avoided.

In this case, the first resource server may be dynamically created by the first data platform through the cloud when sending the data request, or may be deployed by the cloud.

Further, in a case that the second resource server is dynamically created for the cloud, the method further includes:
releasing the second resource server after the second data platform sends the response data to the first data platform.

When the second data platform sends response data to the first data platform based on the dynamically created second resource server, the cloud releases the second resource server on the second data platform. Therefore, the second resource server can be dynamically created by the cloud when the second resource server is required to be used, and after data interaction is completed, the second resource server is dynamically released by the cloud, so that the space of the second data platform cannot be occupied, flexible deployment of the resource server on the second data platform is facilitated, and the space utilization rate of the second data platform is higher.

The embodiment of the disclosure also provides a data interaction apparatus.

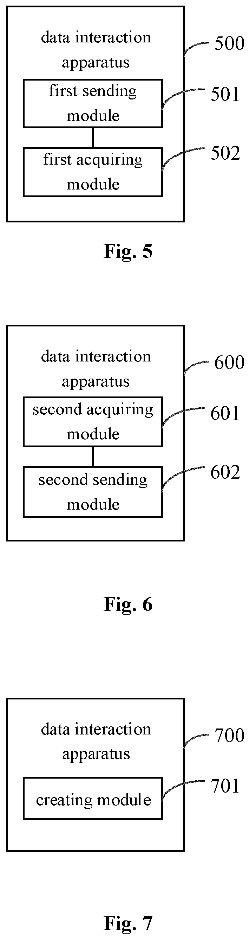

Referring to Fig. 5, Fig. 5 is a block diagram of a data interaction apparatus according to a fourth embodiment of the disclosure, where the data interaction apparatus is applied to a first data platform. As shown in Fig. 5, the data interaction apparatus 500 includes:
a first sending module 501, configured to send a data request to a second data platform based on a first resource server provided by a cloud or based on a local server;
a first acquiring module 502, configured to acquire response data fed back by the second data platform based on a second resource server provided by the cloud;
where at least one of the first resource server and the second resource server is dynamically created by the cloud.

Optionally, the first sending module 501 is further configured to:
in the case that that a data acquisition request sent by a user equipment is acquired, send the data request to the second data platform, based on the first resource server dynamically established by the cloud,;
   or
in the case that that a data acquisition request sent by user equipment is acquired, determine the first resource server provided by the cloud corresponding to the user equipment, and send the data request to the second data platform based on the first resource server, where the first resource server is a resource server deployed by the cloud on the first data platform.

Optionally, the first resource server is dynamically created by the cloud, and the data interaction apparatus 500 further includes:
a first release module configured to feed back the response data to the user equipment through the first resource server, and release the first resource server.

Optionally, the second resource server is dynamically created by the cloud, and the second resource server is released after the response data is fed back to the first data platform.

Optionally, in a case that the first resource server is dynamically created by the cloud, the second resource server is a resource server that is deployed by the cloud on the second data platform.

It should be noted that the data interaction apparatus 500 provided in this embodiment can implement all technical solutions of the method of data interaction embodiment in the foregoing first embodiment, and therefore at least all technical effects can be implemented, which is not described herein again.

Referring to Fig. 6, Fig. 6 is a block diagram of a data interaction apparatus applied to a second data platform according to a fifth embodiment of the disclosure. As shown in Fig. 6, the data interaction apparatus 600 includes:
a second acquiring module 601, configured to acquire a data request sent by a first data platform based on a first resource server provided by a cloud or based on a local server;
a second sending module 602, configured to, in response to the data request, send response data to the first data platform based on a second resource server provided by the cloud;
where at least one of the first resource server and the second resource server is dynamically created by the cloud.

Optionally, the second sending module 602 is further configured to:
send the response data to the first data platform, based on a second resource server dynamically created based on the cloud;
   or
send the response data to the first data platform, based on the second resource server deployed by the cloud on the second data platform.

Optionally, the second resource server is dynamically created by the cloud, and the data interaction apparatus 600 further includes:
a the second releasing module configured to release the second resource server.

Optionally, the first resource server is dynamically created by the cloud in the case that a data acquisition request sent by a user equipment is acquired by the first data platform, and the first resource server is released after the response data is fed back to the user equipment.

Optionally, the first resource server is a resource server deployed by the cloud on the first data platform in the case that the second resource server is dynamically created by the cloud.

It should be noted that the data interaction apparatus 600 provided in this embodiment can implement all technical solutions of the method of data interaction embodiment in the second embodiment, and therefore at least all technical effects can be implemented, which is not described herein again.

Referring to Fig. 7, Fig. 7 is a structural diagram of a data interaction apparatus according to a sixth embodiment of the present disclosure, where the data interaction apparatus is applied to a cloud, and the cloud includes a first data platform and a second data platform. As shown in Fig. 7, the data interaction apparatus 700 includes:
a creating module 701, configured to, in the case that that a first data platform sends a data request to a second data platform based on a first resource server provided by a cloud or based on a local server, feed back response data to the first data platform based on a second resource server provided by the cloud; where at least one of the first resource server and the second resource server is dynamically created by the cloud.

Optionally, the creating module 701 is further configured to:
in the case that a data acquisition request sent by user equipment is acquired by the first data platform, dynamically create the first resource server on the first data platform.

Optionally, the data interaction apparatus 700 further includes:
a third releasing module, configured to, after the response data is acquired by the first data platform and the response data is sent to the user equipment, release the first resource server.

Optionally, the creating module 701 is further configured to:
in the case that the data request sent by the first data platform is received by the second data platform, dynamically create the second resource server on the second data platform.

Optionally, the third releasing module is further configured to:
release the second resource server after the second data platform sends the response data to the first data platform.

It should be noted that the data interaction apparatus 700 provided in this embodiment can implement all technical solutions of the method of data interaction embodiment in the third embodiment, and therefore at least all technical effects can be implemented, which is not described herein again.

The present disclosure also provides an electronic device, a readable storage medium, and a computer program product according to embodiments of the present disclosure.

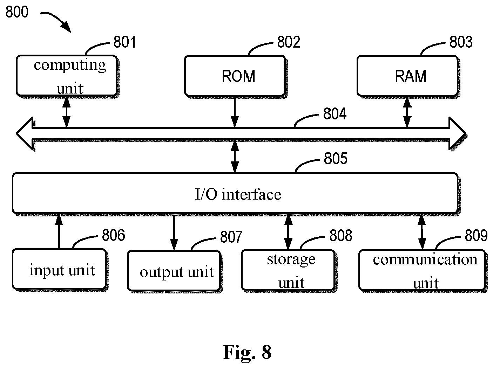

Fig. 8 shows a schematic block diagram of an example electronic device 800 that may be used to implement embodiments of the present disclosure. Electronic devices are intended to represent various forms of digital computers, such as laptops, desktops, workstations, personal digital assistants, servers, blade servers, mainframes, and other appropriate computers. Electronic devices may also represent various forms of mobile devices, such as personal digital processors, cellular telephones, smart phones, wearable devices, and other similar computing devices. The components shown herein, their connections and relationships, and their functions, are meant to be examples only, and are not intended to limit implementations of the disclosure described and/or claimed herein.

As shown in Fig. 8, the apparatus 800 includes a computing unit 801 which can perform various appropriate actions and processes according to a computer program stored in a Read Only Memory (ROM) 802 or a computer program loaded from a storage unit 808 into a Random Access Memory (RAM) 803. In the RAM 803, various programs and data necessary for the operation of the device 800 can also be stored. The calculation unit 801, the ROM 802, and the RAM 803 are connected to each other by a bus 804. An input/output (I/O) interface 805 is also connected to bus 804.

A number of components in the device 800 are connected to the I/O interface 805, including: an input unit 806 such as a keyboard, a mouse, or the like; an output unit 807 such as various types of displays, speakers, and the like; a storage unit 808, such as a magnetic disk, optical disk, or the like; and a communication unit 809 such as a network card, modem, wireless communication transceiver, etc. The communication unit 809 allows the device 800 to exchange information/data with other devices via a computer network such as the internet and/or various telecommunication networks.

Computing unit 801 may be a variety of general and/or special purpose processing components with processing and computing capabilities. Some examples of the computing unit 801 include, but are not limited to, a Central Processing Unit (CPU), a Graphics Processing Unit (GPU), various dedicated Artificial Intelligence (AI) computing chips, various computing units running machine learning model algorithms, a Digital Signal Processor (DSP), and any suitable processor, controller, microcontroller, and so forth. The computing unit 801 performs the various methods and processes described above, such as any of the method of data interactions described above. For example, in some embodiments, the method of data interaction may be implemented as a computer software program tangibly embodied on a machine-readable medium, such as storage unit 808. In some embodiments, part or all of a computer program may be loaded onto and/or installed onto device 800 via ROM 802 and/or communications unit 809. When loaded into RAM 803 and executed by computing unit 801, a computer program may perform one or more of the steps of the method of data interaction described above. Alternatively, in other embodiments, the computing unit 801 may be configured to perform the method of data interactions described above in any other suitable manner (e.g., by way of firmware).

Various implementations of the systems and techniques described here above may be implemented in digital electronic circuitry, integrated circuitry, Field Programmable Gate Arrays (FPGAs), Application Specific Integrated Circuits (ASICs), Application Specific Standard Products (ASSPs), system on a chip (SOCs), load programmable logic devices (CPLDs), computer hardware, firmware, software, and/or combinations thereof. These various embodiments may include: implemented in one or more computer programs that are executable and/or interpretable on a programmable system including at least one programmable processor, which may be special or general purpose, receiving data and instructions from, and transmitting data and instructions to, a storage system, at least one input device, and at least one output device.

Program code for implementing the methods of the present disclosure may be written in any combination of one or more programming languages. These program code may be provided to a processor or controller of a general purpose computer, special purpose computer, or other programmable data processing apparatus, such that the program code, when executed by the processor or controller, causes the functions/acts specified in the flowchart and/or block diagram to be performed. The program code may execute entirely on the machine, partly on the machine, as a stand-alone software package, partly on the machine and partly on a remote machine or entirely on the remote machine or server.

In the context of this disclosure, a machine-readable medium may be a tangible medium that can contain, or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of a machine-readable storage medium would include an electrical connection based on one or more wires, a portable computer diskette, a hard disk, a Random Access Memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

To provide for interaction with a user, the systems and techniques described here can be implemented on a computer having: a display device (e.g., a CRT (cathode ray tube) or LCD (liquid crystal display) monitor) for displaying information to a user; and a keyboard and a pointing device (e.g., a mouse or a trackball) by which a user may provide input to the computer. Other kinds of devices may also be used to provide for interaction with a user; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back-end component (e.g., as a data server), or that includes a middleware component (e.g., an application server), or that includes a front-end component (e.g., a user computer having a graphical user interface or a web browser through which a user can interact with an implementation of the systems and techniques described here), or any combination of such back-end, middleware, or front-end components. The components of the system can be interconnected by any form or medium of digital data communication (e.g., a communication network). Examples of communication networks include: local Area Networks (LANs), Wide Area Networks (WANs), and the Internet.

The computer system may include clients and servers. A client and server are generally remote from each other and typically interact through a communication network. The relationship of client and server arises by virtue of computer programs running on the respective computers and having a client-server relationship to each other.

It should be understood that various forms of the flows shown above, reordering, adding or deleting steps, may be used. For example, the steps described in the present disclosure may be executed in parallel, sequentially, or in different orders, and are not limited herein as long as the desired results of the technical solutions disclosed in the present disclosure can be achieved.

The above detailed description should not be construed as limiting the scope of the disclosure. It should be understood by those skilled in the art that various modifications, combinations, sub-combinations and substitutions may be made, depending on design requirements and other factors. Any modification, equivalent replacement, and improvement made within the spirit and principle of the present disclosure should be included in the protection scope of the present disclosure.

## Claims

1. A method of data interaction, comprising:
sending (S101) a data request to a second data platform based on a first resource server provided by a cloud or based on a local server;
acquiring (S102) response data fed back by the second data platform based on a second resource server provided by the cloud;
wherein at least one of the first resource server and the second resource server is dynamically created by the cloud.

2. The method according to claim 1, wherein the sending (S101) the data request to the second data platform based on the first resource server provided by the cloud comprises:
in the case that that a data acquisition request sent by a user equipment is acquired, sending the data request to the second data platform, based on the first resource server dynamically established by the cloud,;
or
in the case that that a data acquisition request sent by user equipment is acquired, determining the first resource server provided by the cloud corresponding to the user equipment, and sending the data request to the second data platform based on the first resource server, wherein the first resource server is a resource server deployed by the cloud on the first data platform.

3. The method according to claim 2, wherein the first resource server is dynamically created by the cloud, the method further comprises:
feeding back the response data to the user equipment through the first resource server, and releasing the first resource server;
wherein the second resource server is dynamically created by the cloud and released after feeding back the response data to the first data platform.

4. The method according to claim 1, wherein the second resource server is a resource server deployed by the cloud on the second data platform in the case that the first resource server is dynamically created by the cloud.

5. A method of data interaction, comprising:
acquiring (S301) a data request sent by a first data platform based on a first resource server provided by a cloud or based on a local server;
in response to the data request, sending (S302) response data to the first data platform based on a second resource server provided by the cloud;
wherein at least one of the first resource server and the second resource server is dynamically created by the cloud.

6. The method according to claim 5, wherein the sending (S302) the response data to the first data platform based on the second resource server provided by the cloud comprises:
sending the response data to the first data platform, based on a second resource server dynamically created based on the cloud;
or
sending the response data to the first data platform, based on the second resource server deployed by the cloud on the second data platform.

7. The method according to claim 6, wherein the second resource server is dynamically created by the cloud, and after sending the response data to the first data platform, the method further comprises:
releasing the second resource server;
wherein the first resource server is dynamically created by the cloud in the case that a data acquisition request sent by a user equipment is acquired by the first data platform, and the first resource server is released after the response data is fed back to the user equipment.

8. The method according to claim 5, wherein the first resource server is a resource server deployed by the cloud on the first data platform in the case that the second resource server is dynamically created by the cloud.

9. A method of data interaction, comprising:
in the case that that a first data platform sends a data request to a second data platform based on a first resource server provided by a cloud or based on a local server, feeding back (S401), by the second data platform, response data to the first data platform based on a second resource server provided by the cloud;
wherein at least one of the first resource server and the second resource server is dynamically created by the cloud.

10. The method according to claim 9, further comprising:
in the case that a data acquisition request sent by user equipment is acquired by the first data platform, dynamically creating the first resource server on the first data platform.

11. The method according to claim 10, further comprising:
after the response data is acquired by the first data platform and the response data is sent to the user equipment, releasing the first resource server.

12. The method according to any one of claims 9 to 11, further comprising:
in the case that the data request sent by the first data platform is received by the second data platform, dynamically creating the second resource server on the second data platform;
wherein the method further comprises:
releasing the second resource server after the second data platform sends the response data to the first data platform.

13. A data interaction apparatus (500), comprising:
a first sending module (501), configured to send a data request to a second data platform based on a first resource server provided by a cloud or based on a local server;
a first acquiring module (502), configured to acquire response data fed back by the second data platform based on a second resource server provided by the cloud;
wherein at least one of the first resource server and the second resource server is dynamically created by the cloud.

14. A data interaction apparatus (600), comprising:
a second acquiring module (601), configured to acquire a data request sent by a first data platform based on a first resource server provided by a cloud or based on a local server;
a second sending module (602), configured to, in response to the data request, send response data to the first data platform based on a second resource server provided by the cloud;
wherein at least one of the first resource server and the second resource server is dynamically created by the cloud.

15. A data interaction apparatus (700), comprising:
a creating module (701), configured to, in the case that that a first data platform sends a data request to a second data platform based on a first resource server provided by a cloud or based on a local server, feedback response data to the first data platform based on a second resource server provided by the cloud;
wherein at least one of the first resource server and the second resource server is dynamically created by the cloud.

16. A non-transitory computer readable storage medium, storing computer instructions to enable a computer to perform the method of any one of claims 1 to 4, or to perform the method of any one of claims5 to 8, or to perform the method of any one of claims 9 to 12.

17. A computer program product, comprising a computer program, wherein the computer program is executed by a processor to perform the method of any one of claims 1 to 4, or perform the method of any one of claims 5 to 8, or perform the method of any one of claims 9 to 12.
